(19) **Europäisches Patentamt / European Patent Office / Office européen des brevets**

(11) **EP 4 549 999 A1**

(12) **EUROPEAN PATENT APPLICATION**

(43) Date of publication:
07.05.2025 Bulletin 2025/19

(21) Application number: 24205925.1

(22) Date of filing: 10.10.2024

(51) International Patent Classification (IPC):
*G01S 13/95* (2006.01)     *G01S 7/41* (2006.01)
*G01S 13/86* (2006.01)

(52) Cooperative Patent Classification (CPC):
G01S 13/953; G01S 7/417; G01S 13/867;
G01W 1/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 03.11.2023 IN 202311075047
18.12.2023 US 202318543911

(71) Applicant: **Honeywell International Inc.
Charlotte, NC 28202 (US)**

(72) Inventors:
• **VARDHAN, Harsh
Charlotte, 28202 (US)**
• **PAL, Debabrata
Charlotte, 28202 (US)**

(74) Representative: **Haseltine Lake Kempner LLP
Cheapside House
138 Cheapside
London EC2V 6BJ (GB)**

(54) **SYSTEM AND METHOD FOR VISION-BASED PREDICTIVE WIND SHEAR RECOGNITION FOR SMALL-SIZED AIRCRAFT**

(57)     Techniques to detect and differentiate the clutter patterns received by a sensor, such as a weather radar, from the desired signal. The systems and analysis techniques of this disclosure may separate the target signal from noise, interference, and clutter, in situations where the desired signal amplitude may be below a noise threshold. The systems and techniques of this disclosure may include algorithms to analyze signals from weather radar, and other sensors, when the clutter predominates and prevents the desired signal from being identified. Differentiating clutter from the received weather signals may be an issue in any situation when an interference is co-present with the desired signal. The challenge to isolate the desired signal from noise and clutter may increase multifold when the antenna size decreases. Therefore, the techniques of this disclosure may be useful for small sized weather radar antennae.

FIG. 1

EP 4 549 999 A1

**Description**

This application claims the benefit of Indian Provisional Application No. 202311075047 filed November 3, 2023, the entire contents of which is incorporated herein by reference.

**TECHNICAL FIELD**

The disclosure relates analyzing sensed weather data received from weather radar and other sensors.

**BACKGROUND**

A weather radar sends electromagnetic pulses into the atmosphere and analyzes the reflected wave pattern to identify and locate different precipitation types to help identify weather conditions as rain, snow, turbulence, wind shear, hail, thunderstorm, and other weather phenomena. Weather radar, and other weather sensors onboard an aircraft may help ensures the aircraft safety as well as passenger, and crew safety in adverse weather conditions. Weather radar and other sensors may be used in commercial and private aircraft.

**SUMMARY**

In general, the disclosure describes several techniques to detect and differentiate the clutter patterns received by a sensor, such as a weather radar, from the desired signal. The systems and analysis techniques of this disclosure may separate the target signal from noise, interference, and clutter, in situations where the desired signal amplitude may be below a noise threshold. Due to the space constraint in small-sized aircraft, it may be desirable to reduce antenna size without degrading the detection performance. The systems and techniques of this disclosure may include algorithms to analyze signals from weather radar, and other sensors, when the clutter predominates and prevents the desired signal from being identified. Differentiating clutter from the received weather signals may be an issue in any situation when an interference is co-present with the desired signal. The challenge to isolate the desired signal from noise and clutter may increase multifold when the antenna size decreases. Therefore, the techniques of this disclosure may be useful for small sized weather radar antennae. Generally, the smaller antennae have larger sidelobes, which may erroneously detect undesired signals along with the desired signal. The systems and techniques of this disclosure describe vision-based analysis for predictive weather recognition applied to received radar signals, and signals from other sensors, to inform the aircraft operator of hazardous weather near a flight path for an aircraft, such as wind shear.

In one example, this disclosure describes a weather radar system includes an antenna configured to transmit radar signals and receive reflected radar return signals; processing circuitry configured to: receive the radar return signals from the antenna; generate a two-dimensional (2D) coherent processing interval (CPI) heatmap image based on the radar return signals; perform image processing on the heatmap image; based on the image processing, classify features of the heatmap image as at least weather or clutter; based on the classification, determine whether wind shear is present in a field of regard for the radar system.

In another example, this disclosure describes a computing system, the computing system includes a memory; processing circuitry operatively coupled to the memory, the processing circuitry configured to: receive radar return signals from a weather radar antenna; generate a two-dimensional (2D) coherent processing interval (CPI) heatmap image based on the radar return signals; perform image processing on the heatmap image; based on the image processing, classify features of the heatmap image as at least weather or clutter; based on the classification, determine whether wind shear is present in a field of regard for the weather radar antenna.

In another example, this disclosure describes a non-transitory computer-readable storage medium comprising instructions that, when executed, cause processing circuitry of a computing device to: receive radar return signals from a weather radar antenna; generate a two-dimensional (2D) coherent processing interval (CPI) heatmap image based on the radar return signals; perform image processing on the heatmap image; based on the image processing, classify features of the heatmap image as at least weather or clutter; based on the classification, determine whether wind shear is present in a field of regard for the weather radar antenna.

The details of one or more examples of the disclosure are set forth in the accompanying drawings and the description below. Other features, objects, and advantages of the disclosure will be apparent from the description and drawings, and from the claims.

**BRIEF DESCRIPTION OF DRAWINGS**

FIG. 1 is a conceptual diagram illustrating an example weather classification system according to one or more techniques of this disclosure.

FIG. 2 is a block diagram illustrating an example system for weather classification and prediction according to one or more techniques of this disclosure.

FIGS. 3A, 3B, 3C and 3D are examples of CPI heat map images that may be generated based on the received information from the sensors of this disclosure.

FIG. 4A is a flowchart illustrating one example implementation for a data-driven image-processing approach to classify information in received radar signals according to one or more techniques of this disclosure.

FIG. 4B is a flowchart illustrating an example implementation for a data-driven image-processing based feature extraction and a neural-network that learns to classify weather and clutter based on the extracted feature parameters.

FIG. 4C is a flowchart illustrating an example implementation for data-driven image processing using a convolutional neural network (CNN) to automatically extract latent features from 2D CPI heatmap images.

**DETAILED DESCRIPTION**

This disclosure describes an image-processing approach to classify a weather pattern from received weather radar returns, as well as from images received from other sensors such as electro-optical cameras, LIDAR, and other sensors. Instead of defining an empirical threshold to differentiate signal from clutter and noise, in some examples, the systems of this disclosure may apply a neural network-based learning approach to automatically distinguish the desired signal from different kinds of interference including intentional (jamming) or unintentional (clutter, false alarms, shadowing and similar unintentional interference).

One example weather pattern that may be detected by the weather classification system of this disclosure includes wind shear, e.g., predictive wind shear (PWS). Wind shear may become most hazardous when an aircraft is about to land or take off, especially when its altitude is not too high above the ground and the reaction time for the pilot is short.

The weather classification system of this disclosure may address shortcomings of existing approaches. Some existing approaches include a clutter removal filter and pulse pair processing to help remove clutter from the target signal. Another existing approach is moment estimation, in which the spectral moments are calculated for each batch of data. Through moment estimation, the reflectivity, mean velocity, and velocity variance are calculated. The major challenge in existing techniques arises when the signal amplitude is lower than a predetermined noise threshold for the weather radar system. If the signal mixed with interferences does not cross the noise threshold for the system, then the moment estimation or other signal processing techniques is not going to give the accurate detection of the signal. In this case, it may be possible to further lower the threshold of the noise floor, but lowering the noise floor cannot be done beyond a certain limit as it can introduce too many false positives. The other disadvantage/limitation with the existing techniques are that in the case of airborne weather radar, if the Doppler velocity compensation is not accurate, then the identification between clutter and wind shear based on spectral moment estimation will not be accurate. Also, existing PWS algorithms may work for larger weather radar antenna sizes, e.g., about 18 to 30 inches, 450 to 750 mm. However, for smaller aircraft, such as business jects, a smaller size antenna, e.g., approximately 12-inch, 300 mm, antennae may be desirable. Existing PWS algorithm for systems with the smaller size antennae may not perform well to inform the flight crew of hazardous weather near the flight path of an aircraft.

In contrast, the image processing based analysis of the radar images of this disclosure, which may include machine learning in some examples, may differentiate the desired signal from the weather clutter and noise based on the classification techniques of this disclosure and do not rely on an empirical noise threshold. This disclosure describes systems that may also utilize spectral moments to distinguish between the signature of clutter and the weather but utilize a data-driven decision-making approach. The differences between weather and clutter can be identified because the clutter mean velocity and variance will be centered around zero, whereas weather spectral moments i.e., mean velocity and variance, will be spread according to their Doppler frequencies.

The techniques of this disclosure are configured to classify received information as desired weather data or as undesired clutter or noise. The output from the systems this disclosure may include a determination of whether the received data is weather, clutter or a combination of weather and clutter. The techniques of this disclosure differ from other weather prediction techniques, such as nowcasting, which receives a sequence of radar images, process the sequence of radar images using machine learning techniques, e.g., an encoder and decoder, and outputs predicted radar images of the next time instance. In contrast, the system of this disclosure may classify and differentiate the weather from the clutter and other interferences, based on the signature and reflectivity from each range bin and doppler bin data. First, radar images based on received reflected radar energy may be processed into a two-dimensional (2D) coherent processing interval (CPI) heatmap image. In some examples, the systems of this disclosure may use an artificial intelligence (AI) based mimicking of signal processing for the CPI images to efficiently filter and remove the unwanted information. In some examples, the filtered information may be input to a predictive approach and will enable a better estimation and prediction in future time instances, e.g., to predict wind shear. In this manner, the techniques of this disclosure, by classifying and filtering the received radar information, may improve weather prediction for future time instances. Thus, in some examples the weather classification system of this disclosure may be considered a processing step inserted between receiving the sensed weather information wand signal processing that is configured to predict future time instances.

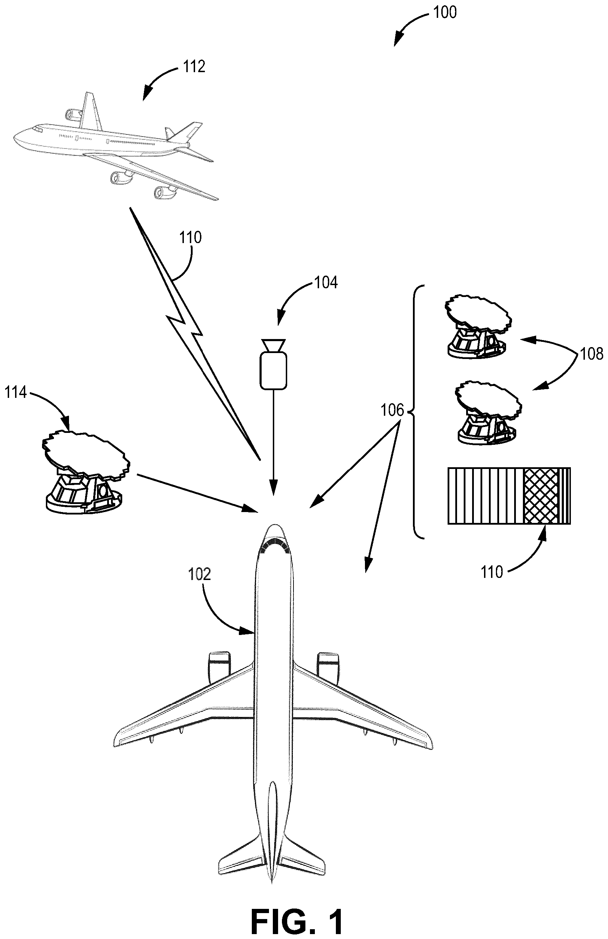

FIG. 1 is a conceptual diagram illustrating an example weather classification system according to one or more techniques of this disclosure. System 100 includes first aircraft 102 and second aircraft 112. Though aircraft 102 and 112 are depicted as manned aircraft, either of both of aircraft 102 and 112 may be unmanned aircraft, such as an unmanned aerial system (UAS). Also, as described above, the techniques of this disclosure may be beneficial for smaller aircraft using smaller radar antennae, such as business jets, turboprop aircraft, general aviation aircraft and similar aircraft.

In some examples, aircraft 102 may include a weather radar system that has a weather radar antenna 114, which may be mounted in the nose of aircraft 102. Aircraft 102 may also include other weather sensors 104 such as electro-optical cameras configured to capture visible light, infrared, and/or ultraviolet light, as well as configured for night vision. Other sensors 104 may also include multispectral sensors and LIDAR, e.g., light detection and ranging, which is sensing method that uses pulsed laser light to measure ranges.

Because the techniques of this disclosure may allow for accurate weather information processing using smaller (less than 12 inches or 300 mm) radar antennae, a weather radar system of this disclosure may include two or more smaller antennae 106. The smaller antennae may be mounted either in the nose, or in multiple locations on the aircraft, such as a wing pod, vertical stabilizer pod, belly pod and similar locations. Some examples of antennae may include fixed beam antennae that are mechanically scanned across the field of view (FOV) of the radar, e.g., antenna 114 and antennae 108. In other examples, the radar system may include a phased array such as 110, as well as a combination of phased array antenna that is also mechanically scanned.

In some examples, the weather classification system of this disclosure may be used to across different aircraft traveling through the same vicinity at approximately the same time. Such cross-aircraft weather hazard prediction may be useful in examples in which a weather radar system has failed, or to provide wider coverage area for weather classification and prediction than visible to the onboard weather radar system and other sensors. For example, the weather classification system of aircraft 102 may receive weather data, e.g., in the form of CPI heatmap images as a Range-Doppler image generated from the IQ samples, as well as other formats, from aircraft 112 and may use the received information to predict the weather conditions ahead. IQ sampling is also referred to as complex sampling or quadrature sampling, A pair of periodic signals are said to be in "quadrature" when the signals differ by 90 degrees in phase. The "in-phase" or reference signal is called "I," and the signal shifted by 90 degrees (the signal in quadrature) is called "Q." IQ sampling may be used RF signal modulation, demodulation, and for complex signal analysis.

It may be desirable to limit the processing of such data to only aircraft nearby aircraft 102, e.g., in a same 3D volumetric region of airspace, as well to limit to data collected within a predetermined time interval. In other words, received weather data that is too old may not be useful. The predetermined time interval may vary depending on type of aircraft. If aircraft 102 is a multi-engine jet aircraft traveling about 500 knots, the time interval may be shorter than compared to a general aviation aircraft traveling at 100 to 150 knots.

The techniques of this disclosure may provide several advantages to existing weather radar systems. In some examples, the systems of this disclosure may use learning-based weather detection. When compared to the conventional signal-processing-based radar target detection (RTD) methods, the data-driven image-processing, machine learning and deep learning-based examples of the weather classification techniques of this disclosure may extract weather features automatically and yield more accurate results than other techniques. For example, contrary to threshold dependent conventional wind shear detection approaches such as, pulse pair processing (PPP), moment estimation, and similar approaches.) the neural network-based solution of this disclosure may learns to identity the latent pattern of CPI data and classify wind shear or other weather based on a probability score, which may eliminate the need for defining a threshold.

Other advantages of the image processing based approach of this disclosure may include detection of low radar cross-section (RCS) and micro-doppler signature targets. Low RCS targets such as small (e.g., one meter or less in length and width) unmanned aerial vehicles (UAVs) and birds may be detected through the image processing and neural network algorithms, which may also enable vision-based precise collision detection and accurately differentiate among the UAV and birds. Such small UAVs may have low RCS that may be less than -25 dBsm, or decibels per square meter. In some examples, the system of this disclosure may use micro-Doppler signatures to identify such low RCS targets. Micro-Doppler is generated by the micro motion of the various components within a target, such as propeller rotation of a UAV or flapping of bird wings. Differences in the micro-Doppler signature may be used to identify and differentiate the type of target. This improved detection capability may be achieved without any additional hardware for some radar systems, but rather by including the image processing approach of this disclosure to classify targets from noise and clutter.

As discussed above, the radar systems of this disclosure may have antenna-size independent weather detection. As noted above, existing signal-processing-based solutions may require the associated radar-antenna to be of at least 18 inches, 450 mm or more, which may limits the ability to be deployed in small sized aircraft. The image-processing / learning based approach of this disclosure may result in smaller antennas that can also be used to fit in small sized aircraft or UAVs. Also as noted above, the small sized antennae may allow for more than one antenna that can be placed in available aircraft space. Having redundant antennae be desirable in case of system failure of a single antennae. Also, multiple small antennas can be placed in different direction to get wider radar coverage. In some examples, the image-processing / learning-based approach may select CPI data to analyze from a specific antenna or may leverage data received from multiple antenna source data to classify the features in the images, and in some examples to predict weather in the vicinity of aircraft 102. The smaller antenna may also be a solution for high-altitude drones, e.g., UAS. Drones having light-weight platform and limited space may use a small antenna and the approach of this disclosure may improve the accuracy to predict weather condition, e.g., storms, thunder, rain, wind shear and other weather conditions for safe flying.

As noted above, data from other sensors, such as images captured from cameras, may be used for weather prediction. The system may also provide cross-aircraft weather hazard prediction that leverages other aircraft weather data, flight time, path and interpolating their positional information with respect to the location coordinates of an aircraft e.g., having failed antenna.

The system of this disclosure may also be implemented with low-cost and fast processing. The system may convert CPI data to 2D heatmaps and the various approaches, such as neural network, may directly work on these 2D images. Thus, the heat map based dimensionality reduction of CPI makes the system of this disclosure fast and without the need of high processing capability to process CPI data. In some examples, low-cost "edge" devices, e.g., high speed hardware accelerator devices, may be used to process the image data in real-time which may be less costly than other types of signal processors.

In some examples of mixed received radar signals comprising weather, noise and clutter, the learning-based weather declutter, e.g., using various loss functions may declutter the coefficient of clutter, hail, thunderstorms, rain, snow, and other weather. In this manner, the system of this disclosure may learn to separate the dominant components of the received signals. Also, in some examples, the system of this disclosure may provide learning-based damage prediction. By analyzing the CPI information and associated impact or accident information on aircraft, the system may predict a catastrophic level of weather in the FOV of the radar, and the flight path of the aircraft, and suitable warning can be generated to the flight crew. Similarly, by simultaneously analyzing weather hazards, aircraft position, nearby aircraft positions (e.g., based on ADS-B data), the system may predict a safety zone, and may provide a safety path to the flight crew.

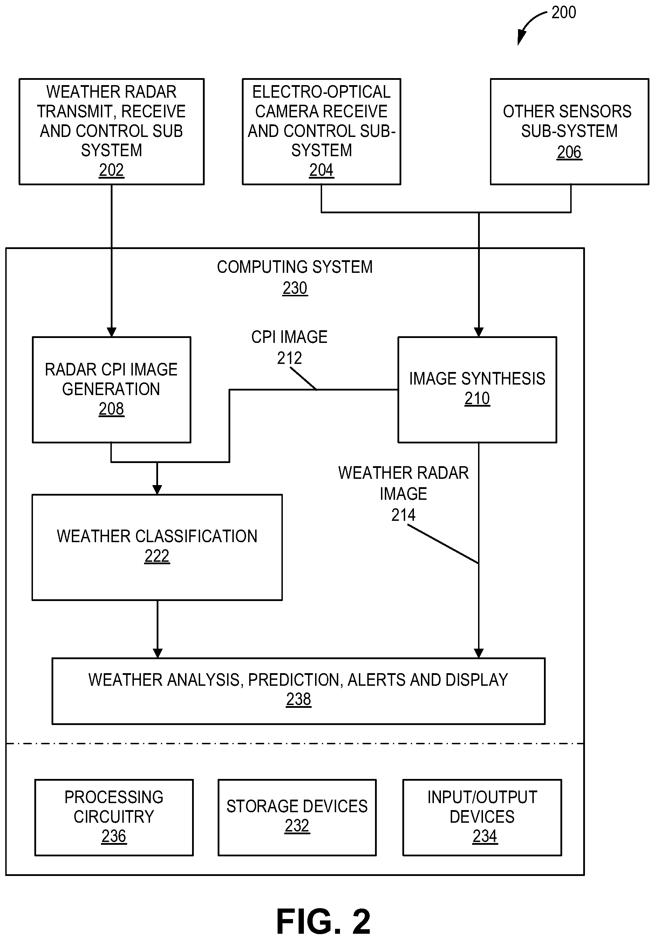

FIG. 2 is a block diagram illustrating an example system for weather classification and prediction according to one or more techniques of this disclosure. System 200 is an example of a weather classification system that may be installed on aircraft 102 or 112 described above in relation to FIG. 1. As noted in FIG. 1, system 100 may also be installed on unmanned aircraft. For unmanned aircraft, the processing circuitry executing the programming instructions perform the techniques of this disclosure, e.g., processing circuitry 236, may be distributed, e.g., may be located on the airframe, as well as located at a ground control station.

Computing system 230 of system 200 is one example implementation. In other examples, computing system 230 may include more or fewer components. Also some listed components may be combined, or installed as separate components. In some examples, computing system 230 may be implemented as a separate computing system configured to perform the weather classification of this disclosure and connected to existing avionics. For example, computing system 230 may be implemented on a graphics processing unit (GPU) card, such as an advanced graphics module (AGM) card, or on a tensor processing unit (TPU). A GPU is processing circuitry configured with parallel processing and a TPU is a processing circuitry with designated architecture for deep learning or machine learning applications. In other examples, computing system 230 may be hosted on existing avionics systems and executed along with other avionics functions, e.g., flight control, navigation, weather radar, communications, and similar functions.

In the example of FIG. 2, computing system 230 receives information from sensors including weather radar 202, camera system 204 and other sensors 206, such as LIDAR, described above in relation to FIG. 1. In some examples, the portion of the weather radar system that feeds information to computing system 230 may be the weather radar transmit, receive and antenna control sub-system 202, simply called weather radar 202 to streamline the description of the subject matter of this disclosure. Other portions of the weather radar may include weather analysis, prediction, alerts and display 238.

Camera system 204, shown as electro-optical camera receive and control sub-system 204 in the example of FIG. 2, may include visible light cameras, night vision cameras and other cameras configured to capture images. Camera system 204 may select cameras, lenses, zoom levels and otherwise control the operation of any cameras operationally connected to camera system 204. Similarly, other sensors sub-system 206 may control power level, aim direction, mode and similar functions for other sensors configured to provide input to computing system 230.

Processing circuitry 236 may execute programming instructions to perform the functions described in this disclosure. Processing circuitry 236 may be operationally coupled to storage devices 232, which may comprise computer readable storage media configured to store the programming instructions, as well as other data received and processed by computing system 230. Input/output devices 234 may include connections to weather radar 202, camera system 204 and other sensors 206, as well as other connections to receive inputs, not shown in FIG. 2, such as a user interface. I/O devices 234 may also include connections to display systems, audio output, indicator lights, controls such as relays, valves, and other similar connections.

Examples of processing circuitry 236 of computing system 230 may include any one or more of a microcontroller (MCU), e.g. a computer on a single integrated circuit containing a processor core, memory, and programmable input/output peripherals, a microprocessor ($\mu$P), e.g. a central processing unit (CPU) on a single integrated circuit (IC), a controller, a digital signal processor (DSP), an application specific integrated circuit (ASIC), a field-programmable gate array (FPGA), a system on chip (SoC) or equivalent discrete or integrated logic circuitry. A processor may be integrated circuitry, i.e., integrated processing circuitry, and the integrated processing circuitry may be realized as fixed hardware processing circuitry, programmable processing circuitry and/or a combination of both fixed and programmable processing circuitry. Accordingly, the terms "processing circuitry," "processor" or "controller," as used herein, may refer to any one or more of the foregoing structures or any other structure operable to perform techniques described herein.

Examples of storage devices 232 may include any type of computer-readable storage media. include random access memory (RAM), read only memory (ROM), programmable read only memory (PROM), erasable programmable read only memory (EPROM), one-time programable (OTP) memory, electronically erasable programmable read only memory (EEPROM), flash memory, or another type of volatile or non-volatile memory device. In some examples the computer readable storage media may store instructions that cause the processing circuitry to execute the functions described herein. In some examples, the computer readable storage media may store data, such as configuration information, temporary values and other types of data used to perform the functions of this disclosure.

System 200, which may be described as a weather radar system although system 200 has other components, may include one or more antennae as described above in relation to FIG. 1 (not shown in FIG. 2). The one or more antennae may be part of weather radar 202 and be configured to transmit radar signals and receive reflected radar return signals. Processing circuitry 236 may be configured to receive the radar return signals from the antenna and generate a two-dimensional coherent processing interval (CPI) heatmap image based on the radar return signals. In other words, for the received radar signals, first, radar CPI image generation 208 may generate 2D heatmaps from CPI data based on the antenna look angle. In some examples, processing circuitry 236 may perform a series of pre-processing steps including gray-scale conversion, contrast stretching to differentiate foreground vs background, thresholding to remove noise, and other steps. In other examples, computing system 230 may not only apply such mentioned steps as the pre-processing stage. Many different combinations of morphological operations or filters can be applied to distinguish weather or clutter from background noise. In some examples, weather classification 222 may detect contours and estimate properties, e.g., bounding box, eccentricity, axis length, circularity, and other properties, then, define rules to classify weather and clutter.

In other words, weather classification 222, as executed by processing circuitry 236 may perform image processing on the heatmap image. As described above in relation to FIG. 1, other examples of image processing may include machine learning, which may be trained to learn to define threshold ranges on multiple feature parameters. In other examples, image processing may include a convolutional neural network (CNN), e.g., a , deep learning-based approach, to automatically extract latent feature from 2D CPI heatmap images and classify weather and clutter. That is, based on the image processing, weather classification 222 may classify features of the heatmap image as weather, clutter, or some combination of weather and clutter. In some examples weather analysis, prediction, alerts, and display may, based on the classification, predict whether wind shear, or other weather phenomena are present in a field of regard for the radar system. Computing system 230 may cause a display device, e.g., a weather radar display, a multifunction display (MFD), an electronic flight bag tablet, or similar display, to generate images representing weather in the FOV of the radar. The images may include colors, annotations, and similar highlighting to provide to the flight crew alerts of hazardous weather, safe flight paths through the weather, and other indications, e.g., as described above in relation to FIG. 1.

In some examples, computing system 230 may use information received from camera system 204 and other sensors 206 to supplement and add further detail to the information from weather radar 202. In other examples, camera system 204 and other sensors 206 may act as a back-up weather prediction system in case weather radar 202 malfunctions or otherwise fails.

In some examples, image synthesis 210, as executed by processing circuitry 236, may convert camera data to CPI image 212, which may include CPI bin data, e.g., synthetic bin data, to generate a 2D CPI heat map image. In some examples, image synthesis 210 may leverage generative networks, e.g., generative adversarial networks

(GAN), variational autoencoder (VAE), diffusion or similar techniques to convert the camera image data to CPI bin data. In some examples, the CPI image 212 may be processed by weather classification 222 as described above. In other words, the converted CPI bin data may be further processed by the same techniques as for the weather radar based CPI image to produce a weather graphical display for the flight crew. In other examples, image synthesis 210, may leverage GAN or other generative networks to directly produce a graphical display of the weather data, e.g., weather radar image 214, which may be output via a display, e.g., 238, as described above.

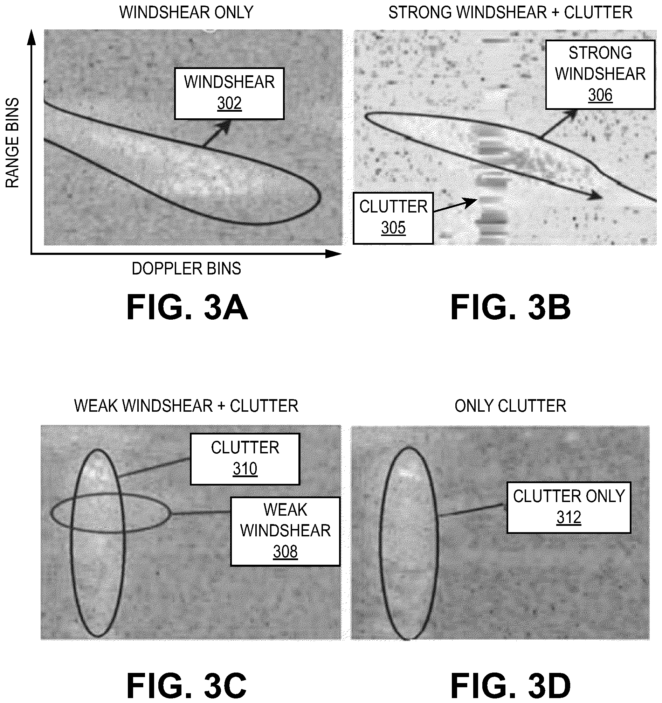

FIGS. 3A, 3B, 3C and 3D are examples of CPI heat map images that may be generated based on the received information from the sensors of this disclosure. As described above in relation to FIGS. 1 and 2, smaller antennae may capture larger sidelobes generating clutter in a radar image. Traditional signal processing methods can locate and eliminate the main-beam clutter zone. However, if the sidelobes become larger in amplitude because of the smaller antenna, unwanted signals (i.e., clutter, interference) appear in the sidelobes, which can lower the likelihood of the true signal being detected, analyzed, and displayed.

As applied to the systems of this disclosure, processing circuitry of a computing system may calculate CPI based on the look angle of an antenna in the space. CPI may include the in-phase and quad-phase (I-Q) data, either in the time domain or in frequency domain. Quad-phase may also be described as quadrature. Each CPI is a 2D plane consisting of range bins, along the Y-axis and Doppler bins information, along the X-axis. The processing circuitry of this disclosure may use data collected in each CPI for the calculation of spectral moments. In the example of FIGS. 3A - 3D:

> The angular information = 120° ( -60° to +60°).
> There is total 114 bins covering 120° angle.
> Hence, Angular Information per Bin = 1.05° (120°/114).
> Range Bins: 63, total range = 10Nm (max).

Using image processing and learning-based weather classification, weather patterns such as wind shear and clutter can be isolated as they pose unique discriminative pattern in terms of slope in CPI. As can be observed in FIG. 3A - 3D, there is some slope for both the Doppler bins (X-axis) and the range bins (Y-axis) in case of wind shear 302 spread. The heat map image of FIG. 3A and 3B indicates that if there is a greater spread between the bins, the wind shear 302 and 306 is stronger. Conversely, as in FIG. 3C, if there is a lesser spread, the wind shear 308 is weaker but still may be hazardous to the aircraft. In contrast, clutter, e.g., 306, 310 and 312 spreads only over the range bins in a particular Doppler band.

The mixture of strong clutter 310 or clutter 305 with high wind shear 306 are shown in FIG. 3B and 3C, respectively. Although the wind shear 306 and clutter 305 are overlapped in FIG. 3B, the severe wind shear is causing it to be better discernible even though clutter is present. However, weak wind shear 308 in presence of clutter 310makes it difficult to isolate. However, by applying the pattern learning approach described by this disclosure (e.g., deep learning, etc.), processing circuitry may distinguish the clutter and the weather pattern.

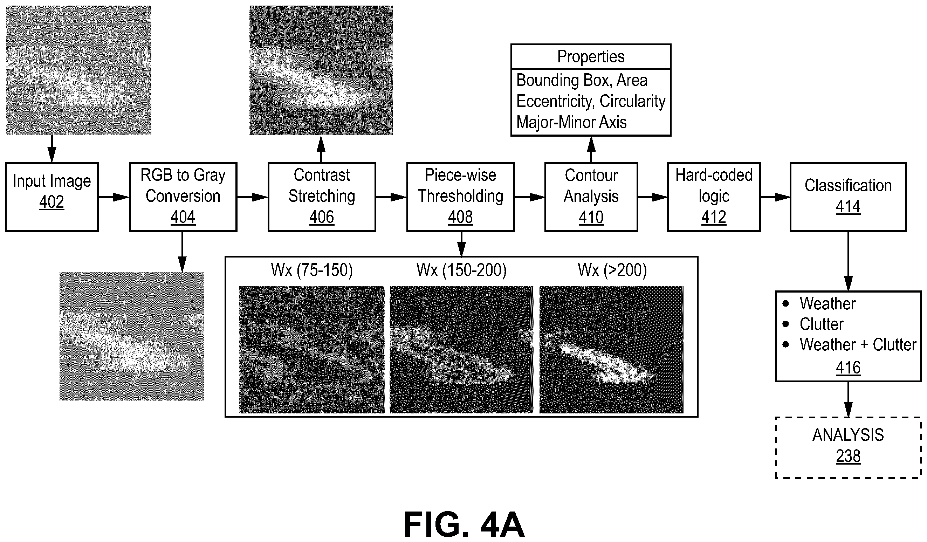

FIG. 4A is a flowchart illustrating one example implementation for a data-driven image-processing approach to classify information in received radar signals according to one or more techniques of this disclosure. FIG. 4A depicts an image processing-based feature extraction using a pre-defined rule to classify weather and clutter based on the extracted feature parameters. As described above in relation to FIG. 2, first, the processing circuitry may generate 2D heatmaps 402 from CPI data based on the antenna look angle, e.g., by radar CPI image generation 208 of FIG. 2. Then the processing circuitry may consider a series of pre-processing steps (e.g., gray-scale conversion 404, contrast stretching 406 to differentiate foreground vs background, piece-wise thresholding 408 to remove noise and other similar steps, not shown in FIG. 4A. As noted above, the processing circuitry may apply any different combinations of morphological operations or filters to distinguish weather or clutter from background noise. The processing circuitry may further detect contours and estimate properties 410, such as bounding box, eccentricity, major and minor axis length, and circularity. Then, the system may define rules, executed by hard-coded logic 412 to classify 414 the weather and clutter 416. An exemplary rule for the axis comparison parameter is below:

$$IF \left( \frac{major\ axis}{minor\ axis} > Th1 \right) and\ (Area\ > Th2)$$

Define: Clutter

Else:

Define: Weather

Where Th1 is a first threshold and Th2 is a second threshold.

Defining one or more rules, such as the above, may depend on human observation of multiple parameters. In some examples, learning to define threshold ranges on multiple feature parameters may become complex.

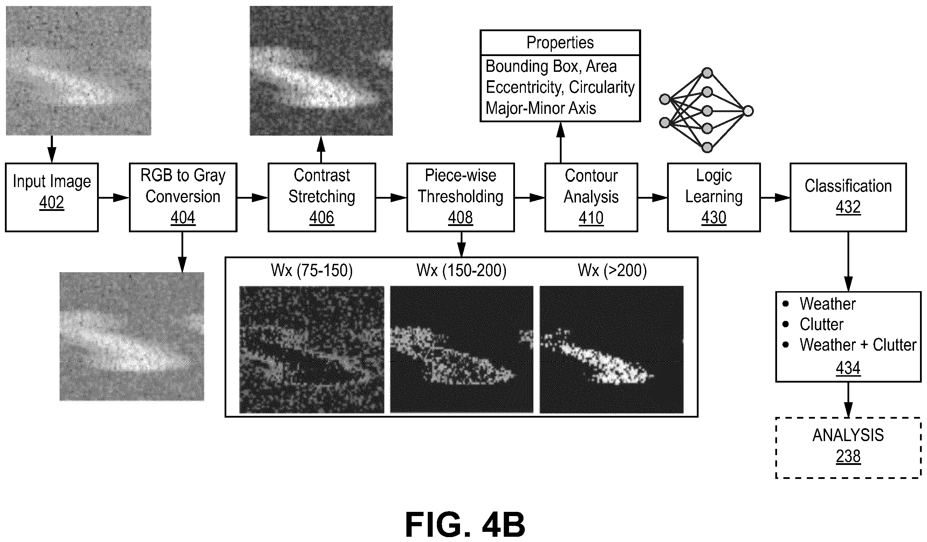

FIG. 4B is a flowchart illustrating an example implementation for a data-driven image-processing based feature extraction and a neural-network that learns to classify weather and clutter based on the extracted feature parameters. The example of FIG. 4B includes the same initial steps as FIG. 4A, e.g., receiving input image 402, gray-scale conversion 404, contrast stretching 406, piece-wise thresholding 408 and contour analysis 410. However, in contrast to FIG. 4A, the logic learning 430 and classification 432 may include a neural network in that case can learn the correlation among features and predict the class as a) weather b) clutter c) mixture of weather and clutter. Contrary to threshold dependent wind shear detection, the neural network-based solution may learn to identity the latent pattern of CPI data and classify weather or wind shear based on maximum probability score. In other words, the neural network-based solution may identify and classify received information based on the highest classification probability score. The neural network may compute the probability of the test CPI data belonging to different classes, e.g., weather or clutter and classify the data based on the calculated probability. In this manner the example of FIG. 4B may eliminate the need for defining thresholds.

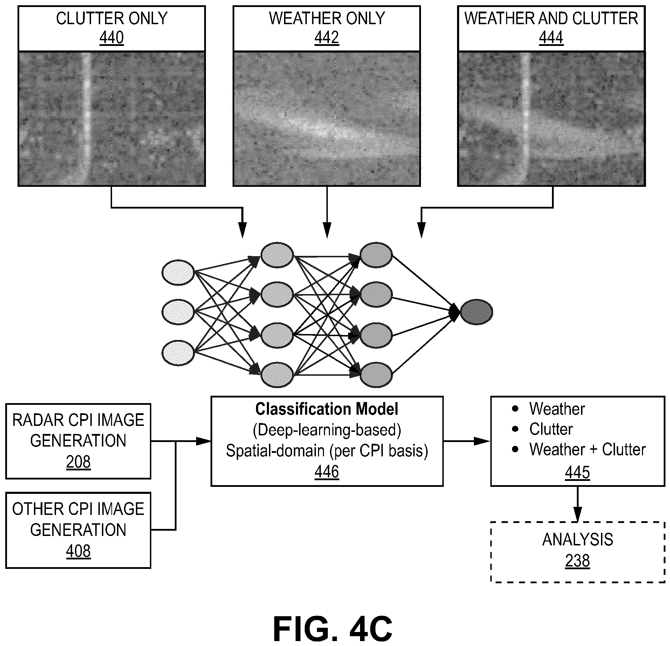

FIG. 4C is a flowchart illustrating an example implementation for data-driven image processing using a convolutional neural network (CNN) to automatically extract latent features from 2D CPI heatmap images and classify weather, clutter and other features, as described above in relation to FIG. 1. The example of FIG. 4C may also be described as a deep learning-based approach.

A computing system, e.g., computing system 230 described above in relation to FIG. 2, may be trained before being deployed and installed in an aircraft using hundreds, or thousands of CPI heatmap images that include examples of clutter only 440, weather only 442 and a combination of weather and clutter 444. In some examples, neural network-based classification model 446 may be trained to identity the latent pattern of CPI data and classify features in the heatmap as weather or clutter based on maximum probability score. The trained, deep-learning based classification model 446 may be installed in an aircraft, either as a stand-alone computing system, or hosted by existing avionics, as described above in relation to FIG. 2.

The steps described above in relation to FIGS 4A and 4B apply suitable morphological operation and feature selection by a user, which in some examples, may be suboptimal for some combinations of weather and clutter. To improve on the techniques described by the examples of FIGS 4A and 4B, the example of 4C applies deep learning algorithms. Because the 2D heatmap from CPI bin data can be regarded as 2D image, the image processing by applying a CNN model may learn the latent features of the data to perform classification.

The neural-network-based model of FIG. 4C may provide learning-based weather declutter. That is, a deep-learning model, like that shown by FIG. 4C, may update parameters (weights and biases) using gradient-descent, such as stochastic gradient descent (SGD), Adam, AdaMatch, others, which may be based on a defined loss function or optimization objective. By minimizing the loss using convex optimization, the model may learn an optimal set of parameters are learnt. Once the model is trained, classification model 446 may be deployed for use in an aircraft.

In some examples, the example loss functions listed below in in eq 1 and 2 to learn to "unmix" or "declutter" the coefficients. Basically, the proportion of weather primitives (i.e., wind shear, hail, thunderstorm, etc.) and clutter are obtained as model prediction.

$$Loss = \alpha 1 * L_{weather} + \alpha 2 * L_{clutter} \qquad [1]$$

$$Loss = \alpha 1 * L_{windshear} + \alpha 2 * L_{hail} + \alpha 3 * L_{Thunderstorm} \cdots \qquad [2]$$

Therefore, classification model 446 may receive a CPI heatmap, e.g., from radar CPI image generation 208 or other CPI image generation 408 described above in relation to FIG. 2. Classification model 446 may classify features in the heatmap as weather, e.g., wind shear, as clutter or some combination, as described above in relation to FIG. 3. In some examples the output from classification model 446 may be further sent for analysis 238, described above in relation to FIG. 2.

As described above in relation to FIGS. 1 and 2, In case of failure in weather radar system, then transmission through ASCB parameters, an optimized neural network model with above equations can help to predict the weather condition ahead of the aircraft using the input CPI data and/or data captured by camera.

The techniques of this disclosure may also be described in the following examples.

Example 1: A weather radar system comprising: an antenna configured to transmit radar signals and receive reflected radar return signals; processing circuitry configured to: receive the radar return signals from the antenna; generate a two-dimensional (2D) coherent processing interval (CPI) heatmap image based on the radar return signals; perform image processing on the heatmap image; based on the image processing, classify features of the heatmap image as at least weather or clutter; based on the classification, determine whether wind shear is present in a field of regard for the radar system.

Example 2: The system of example 1, wherein the image processing comprises analyzing the CPI heatmap using a neural network based classification model, wherein the neural network based classification model is trained to identity latent patterns of CPI data and classify features of the heatmap based on a maximum probability score.

Example 3: The system of any of examples 1 and 2, wherein the antenna is a first antenna, wherein the weather radar system further comprises two or more radar antenna, and wherein the processing circuitry is configured to process source data received from the two or more antenna to classify the features of the heatmap image.

Example 4: The system of any of examples 1 through 3, wherein the processing circuitry is further configured to identify and classify low radar cross section (RCS) targets based on the image processing.

Example 5: The system of any of examples 1 through 4, wherein the processing circuitry is further configured to: receive images from one or more cameras, synthesize a 2D CPI heatmap image based on the received camera images; perform image processing on the heatmap image; based on the image processing, classify features of the heatmap image.

Example 6: The system of any of examples 1 through 5, wherein the processing circuitry is further configured to determine whether specified weather phenomena are present in a field of regard for the radar system based on the classification, wherein the specified weather phenomena comprise one or more of: thunderstorms, hail, turbulence, rain, and snow.

Example 7: The system of any of examples 1 through 6, wherein the weather radar system is configured to be installed on a first aircraft; wherein the processing circuitry is further configured to: receive weather information from a second aircraft; generate a 2D CPI heatmap image based on the received weather information; perform image processing on the heatmap image; based on the image processing, classify features of the heatmap image.

Example 8: A computing system, the computing system comprising: a memory, and processing circuitry operatively coupled to the memory, the processing circuitry configured to: receive radar return signals from a weather radar antenna; generate a two-dimensional (2D) coherent processing interval (CPI) heatmap image based on the radar return signals; perform image processing on the heatmap image; based on the image processing, classify features of the heatmap image as at least weather or clutter; based on the classification, determine whether wind shear is present in a field of regard for the weather radar antenna.

Example 9: The system of example 8, wherein the image processing comprises analyzing the CPI heatmap using a neural network based classification model, wherein the neural network based classification model is trained to identity latent patterns of CPI data and classify features of the heatmap based on a maximum probability score.

Example 10: The system of any of examples 8 and 9, wherein the weather radar antenna is a first antenna, and wherein the processing circuitry is configured to leverage source data received from two or more antenna to classify the features of the heatmap image.

Example 11: The system of any of examples 8 through 10, wherein the processing circuitry is further configured to identify and classify low radar cross section (RCS) targets based on the image processing.

Example 12: The system of any of examples 8 through 11, wherein the processing circuitry is further configured to: receive images from one or more cameras, synthesize a 2D CPI heatmap image based on the received camera images; perform image processing on the heatmap image; based on the image processing, classify features of the heatmap image.

Example 13: The system of any of examples 8 through 12, wherein the processing circuitry is further configured to determine whether specified weather phenomena are present in a field of regard for the radar antenna based on the classification, wherein the specified weather phenomena comprise one or more of: thunderstorms, hail, turbulence, rain, and snow.

Example 14: The system of any of examples 8 through 13, wherein the weather radar antenna is configured to be installed on a first aircraft; wherein the processing circuitry is further configured to: receive weather information from a second aircraft; generate a 2D CPI heatmap image based on the received weather information; perform image processing on the heatmap image; based on the image processing, classify features of the heatmap image.

Example 15: A non-transitory computer-readable storage medium comprising instructions that, when executed, cause processing circuitry of a computing device to: receive radar return signals from a weather radar antenna; generate a two-dimensional (2D) coherent processing interval (CPI) heatmap image based on the radar return signals; perform image processing on the heatmap image; based on the image processing, classify features of the heatmap image as at least weather or clutter; based on the classification, determine whether wind shear is present in a field of regard for the weather radar antenna.

Example 16: The non-transitory computer-readable storage medium of example 15, wherein the image processing comprises analyzing the CPI heatmap using a neural network based classification model, wherein the neural network based classification model is trained to identity latent patterns of CPI data and classify features of the heatmap based on a maximum probability score.

Example 17: The non-transitory computer-readable storage medium of any of examples 15 and 16, wherein the weather radar antenna is a first antenna, and wherein the computer-readable storage medium further comprises instructions for causing the processing circuitry to leverage source data received from two or more antenna to classify the features of the heatmap image.

Example 18: The non-transitory computer-readable storage medium of any of examples 15 through 17, further comprising instructions for causing the processing circuitry to: receive images from one or more cameras, synthesize a 2D CPI heatmap image based on the received camera images; perform image processing on the heatmap image; based on the image processing, classify features of the heatmap image.

Example 19: The non-transitory computer-readable storage medium of any of examples 15 through 18, further comprising instructions for causing the processing circuitry to determine whether specified weather phenomena are present in a field of regard for the radar antenna based on the classification, wherein the specified weather phenomena comprise one or more of: thunderstorms, hail, turbulence, rain, and snow.

Example 20: The non-transitory computer-readable storage medium of any of examples 15 through 19, wherein the weather radar antenna is configured to be installed on a first aircraft; and computer-readable storage medium further comprises instructions for causing the processing circuitry to: receive weather information from a second aircraft; generate a 2D CPI heatmap image based on the received weather information; perform image processing on the heatmap image; based on the image processing, classify features of the heatmap image.

Various examples of the disclosure have been described. These and other examples are within the scope of the following claims.

**Claims**

1. A weather radar system, the system comprising:

    an antenna configured to transmit radar signals and receive reflected radar return signals;
    processing circuitry configured to:

        receive the radar return signals from the antenna;
        generate a two-dimensional (2D) coherent processing interval (CPI) heatmap image based on the radar return signals;
        perform image processing on the heatmap image;
        based on the image processing, classify features of the heatmap image as at least weather or clutter;
        based on the classification, determine whether wind shear is present in a field of regard for the radar system.

2. The system of claim 1, wherein the image processing comprises analyzing the CPI heatmap using a neural network based classification model, wherein the neural network based classification model is trained to identity latent patterns of CPI data and classify features of the heatmap based on a maximum probability score.

3. The system of claim 1 or 2,

    wherein the antenna is a first antenna,
    wherein the weather radar system further comprises two or more radar antenna, and
    wherein the processing circuitry is configured to process source data received from the two or more antenna to classify the features of the heatmap image.

4. The system of any of claims 1-3, wherein the processing circuitry is further configured to identify and classify low radar cross section (RCS) targets based on the image processing.

5. The system of any of claims 1-4, wherein the processing circuitry is further configured to:

    receive images from one or more cameras,
    synthesize a 2D CPI heatmap image based on the received camera images;
    perform image processing on the heatmap image;
    based on the image processing, classify features of the heatmap image.

6. The system of any of claims 1-5, wherein the processing circuitry is further configured to determine whether specified weather phenomena are present in a field of regard for the radar system based on the classification, wherein the specified weather phenomena comprise one or more of: thunderstorms, hail, turbulence, rain, and snow.

7. The system of any of claims 1-6,
   wherein the weather radar system is configured to be installed on a first aircraft; wherein the processing circuitry is further configured to:

    receive weather information from a second aircraft;
    generate a 2D CPI heatmap image based on the received weather information;
    perform image processing on the heatmap image;
    based on the image processing, classify features of the heatmap image.

8. A computing system, the system comprising:

    a memory; and
    processing circuitry operatively coupled to the memory, the processing circuitry configured to:

        receive radar return signals from a weather radar antenna;

generate a two-dimensional (2D) coherent processing interval (CPI) heatmap image based on the radar return signals;

perform image processing on the heatmap image;

based on the image processing, classify features of the heatmap image as at least weather or clutter;

based on the classification, determine whether wind shear is present in a field of regard for the weather radar antenna.

9. The system of claim 8, wherein the image processing comprises analyzing the CPI heatmap using a neural network based classification model, wherein the neural network based classification model is trained to identity latent patterns of CPI data and classify features of the heatmap based on a maximum probability score.

10. The system of claim 8 or 9,

wherein the weather radar antenna is a first antenna, and

wherein the processing circuitry is configured to leverage source data received from two or more antenna to classify the features of the heatmap image.

11. The system of any of claims 8-10, wherein the processing circuitry is further configured to identify and classify low radar cross section (RCS) targets based on the image processing.

12. The system of any of claims 8-11, wherein the processing circuitry is further configured to:

receive images from one or more cameras,

synthesize a 2D CPI heatmap image based on the received camera images;

perform image processing on the heatmap image;

based on the image processing, classify features of the heatmap image.

13. The system of any of claims 8-12, wherein the processing circuitry is further configured to determine whether specified weather phenomena are present in a field of regard for the radar antenna based on the classification, wherein the specified weather phenomena comprise one or more of: thunderstorms, hail, turbulence, rain, and snow.

14. The system of any of claims 8-13,

wherein the weather radar antenna is configured to be installed on a first aircraft; wherein the processing circuitry is further configured to:

receive weather information from a second aircraft;

generate a 2D CPI heatmap image based on the received weather information;

perform image processing on the heatmap image;

based on the image processing, classify features of the heatmap image.

15. A non-transitory computer-readable storage medium comprising instructions that, when executed, cause processing circuitry of a computing device to:

receive radar return signals from a weather radar antenna;

generate a two-dimensional (2D) coherent processing interval (CPI) heatmap image based on the radar return signals;

perform image processing on the heatmap image;

based on the image processing, classify features of the heatmap image as at least weather or clutter;

based on the classification, determine whether wind shear is present in a field of regard for the weather radar antenna.

**FIG. 1**

200

| WEATHER RADAR TRANSMIT, RECEIVE AND CONTROL SUB SYSTEM 202 | ELECTRO-OPTICAL CAMERA RECEIVE AND CONTROL SUB-SYSTEM 204 | OTHER SENSORS SUB-SYSTEM 206 |
|---|---|---|

COMPUTING SYSTEM
230

CPI IMAGE
212

| RADAR CPI IMAGE GENERATION 208 | | IMAGE SYNTHESIS 210 |
|---|---|---|

WEATHER RADAR IMAGE
214

WEATHER CLASSIFICATION
222

WEATHER ANALYSIS, PREDICTION, ALERTS AND DISPLAY
238

| PROCESSING CIRCUITRY 236 | STORAGE DEVICES 232 | INPUT/OUTPUT DEVICES 234 |
|---|---|---|

# FIG. 2

WINDSHEAR ONLY

STRONG WINDSHEAR + CLUTTER

WINDSHEAR
302

STRONG
WINDSHEAR
306

CLUTTER
305

RANGE BINS

DOPPLER BINS

# FIG. 3A

# FIG. 3B

WEAK WINDSHEAR + CLUTTER

ONLY CLUTTER

CLUTTER
310

WEAK
WINDSHEAR
308

CLUTTER ONLY
312

# FIG. 3C

# FIG. 3D

FIG. 4A

EP 4 549 999 A1

FIG. 4B

**FIG. 4C**

Europäisches
Patentamt

European
Patent Office

Office européen
des brevets

# EUROPEAN SEARCH REPORT

Application Number

EP 24 20 5925

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 181 634 B1 (LUE HSIEN-CHIANG [US] ET AL) 23 November 2021 (2021-11-23) * column 1, line 8 - line 9; column 6, line 55 - line 64; column 7, line 4 - line 6; column 7, line 38- line 43; column 8, line 53 - line 55; column 9, line 30 - line 32; column 11, line 17 - line 19 * | 1-15 | INV. G01S13/95 G01S7/41 G01S13/86 |
| X | DUDEK ADRIAN ET AL: "Detect and Avoid of Weather Phenomena on-board UAV: Increasing Detection Capabilities by Information Fusion", 2021 IEEE/AIAA 40TH DIGITAL AVIONICS SYSTEMS CONFERENCE (DASC), IEEE, 3 October 2021 (2021-10-03), pages 1-7, XP034019328, DOI: 10.1109/DASC52595.2021.9594428 [retrieved on 2021-10-28] page 4, column 2; page 6, column 2; * abstract; figure 4 * | 1 | |
| A | US 7 515 088 B1 (WOODELL DANIEL L [US] ET AL) 7 April 2009 (2009-04-07) * column 8, line 30 - line 38; figure 2 * | 7 | TECHNICAL FIELDS SEARCHED (IPC) G01S G01W |
| A | US 6 650 275 B1 (KELLY WALLACE E [US] ET AL) 18 November 2003 (2003-11-18) * column 3, line 12 - line 40; figure 1 * | 5 | |

The present search report has been drawn up for all claims

| Place of search | Date of completion of the search | Examiner |
|---|---|---|
| Munich | 4 March 2025 | Kirscher, Jérôme |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5925

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2025

| Patent document cited in search report | | Publication date | Patent family member(s) | Publication date |
|---|---|---|---|---|
| US 11181634 | B1 | 23-11-2021 | NONE | |
| US 7515088 | B1 | 07-04-2009 | NONE | |
| US 6650275 | B1 | 18-11-2003 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311075047